Europäisches Patentamt

**European Patent Office**

Office européen des brevets

(11) Veröffentlichungsnummer: **0 094 521**
**B1**

(12) **EUROPÄISCHE PATENTSCHRIFT**

(45) Veröffentlichungstag der Patentschrift:
28.01.87

(21) Anmeldenummer: **83103914.4**

(22) Anmeldetag: **21.04.83**

(51) Int. Cl.⁴: **B 60 S 1/16**

(54) **Wischvorrichtung für Scheiben von Kraftfahrzeugen.**

(30) Priorität: **15.05.82 DE 3218373**
**09.11.82 DE 3241259**

(43) Veröffentlichungstag der Anmeldung:
**23.11.83 Patentblatt 83/47**

(45) Bekanntmachung des Hinweises auf die Patenterteilung:
**28.01.87 Patentblatt 87/5**

(84) Benannte Vertragsstaaten:
**BE DE FR GB IT**

(56) Entgegenhaltungen:
**DE - A - 1 811 960**
**DE - A - 2 062 146**
**DE - B - 2 002 130**
**DE - B - 2 014 051**
**US - A - 2 997 888**

(73) Patentinhaber: **ROBERT BOSCH GMBH, Postfach 50,
D-7000 Stuttgart 1 (DE)**

(72) Erfinder: **Seibicke, Horst, Am Bierkelier 18,
D-7580 Bühl-Altschweier (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Stand der Technik

Die Erfindung geht aus von einer Wischvorrichtung nach der Gattung des Hauptanspruchs. Es ist schon aus der DE-A-2 062 146 eine Wischvorrichtung bekannt, bei der die Mittel zum Überführen des Wischelements aus einer Haltestellung in eine ausserhalb des Wischfeldes liegende Parkstellung einen Elektromagneten beinhalten. Der Anker des Magneten greift zum vorbereitenden Abstellen der Wischvorrichtung in die Umlaufbahn einer zum Pendelgetriebe gehörenden Kurbel und schwenkt einen mit einem Kurbelzapfen versehenen Kurbelteil aus, so dass sich der Kurbelzapfen von der Kurbeldrehachse entfernt und somit die erforderliche, zusätzliche Schwenkbewegung des Wischelements bewirkt. Das Einfahren des Magnetankers in die Umlaufbahn der Kurbel muss zeitlich genau abgestimmt werden, damit das Kurbelteil gegen den Anker anläuft. Dieses Anschlagen ist aber mit einem unerwünschten Geräusch verbunden und kann zur Abnutzung der so beanspruchten Bauteile führen.

Vorteile der Erfindung

Die erfindungsgemässe Antriebsvorrichtung mit den kennzeichnenden Merkmalen des Hauptanspruchs hat dem Bekannten gegenüber den Vorteil, dass ein Anschlagen von umlaufenden Bauteilen am gestellfest gehaltenen Magnetanker und die damit verbundenen Nachteile nicht mehr auftreten.

Durch die in den Unteransprüchen aufgeführten Massnahmen sind vorteilhafte Weiterbildungen und Verbesserungen der im Hauptanspruch angegebenen Wischvorrichtung möglich.

Zeichnung

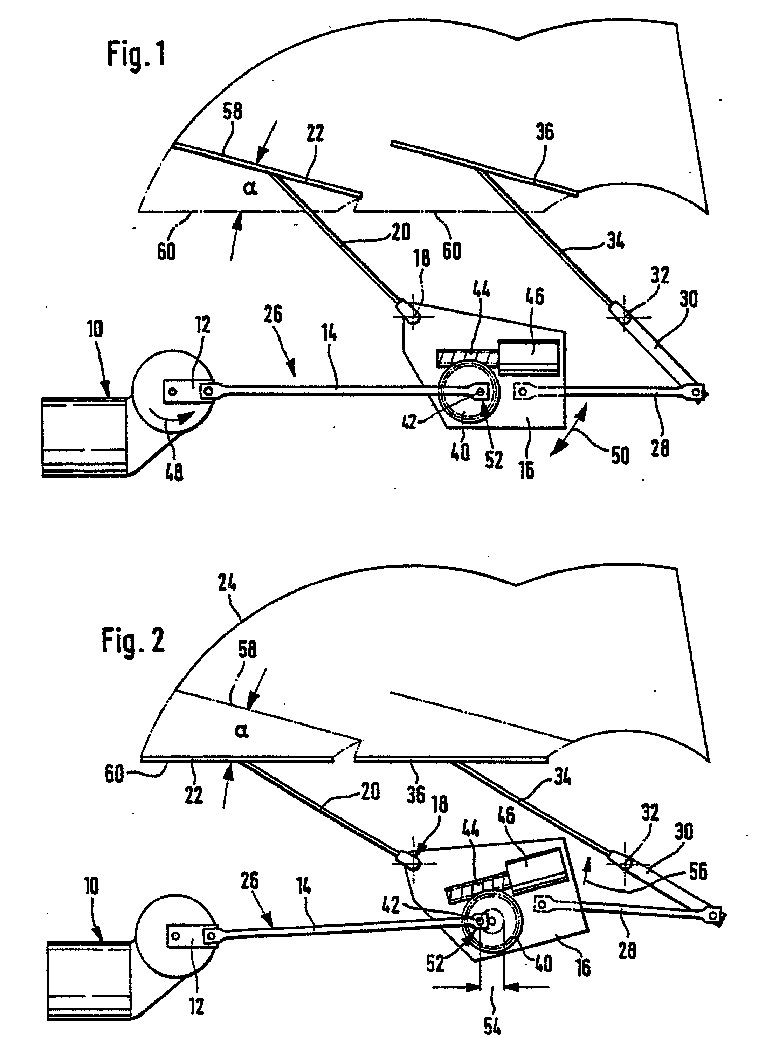

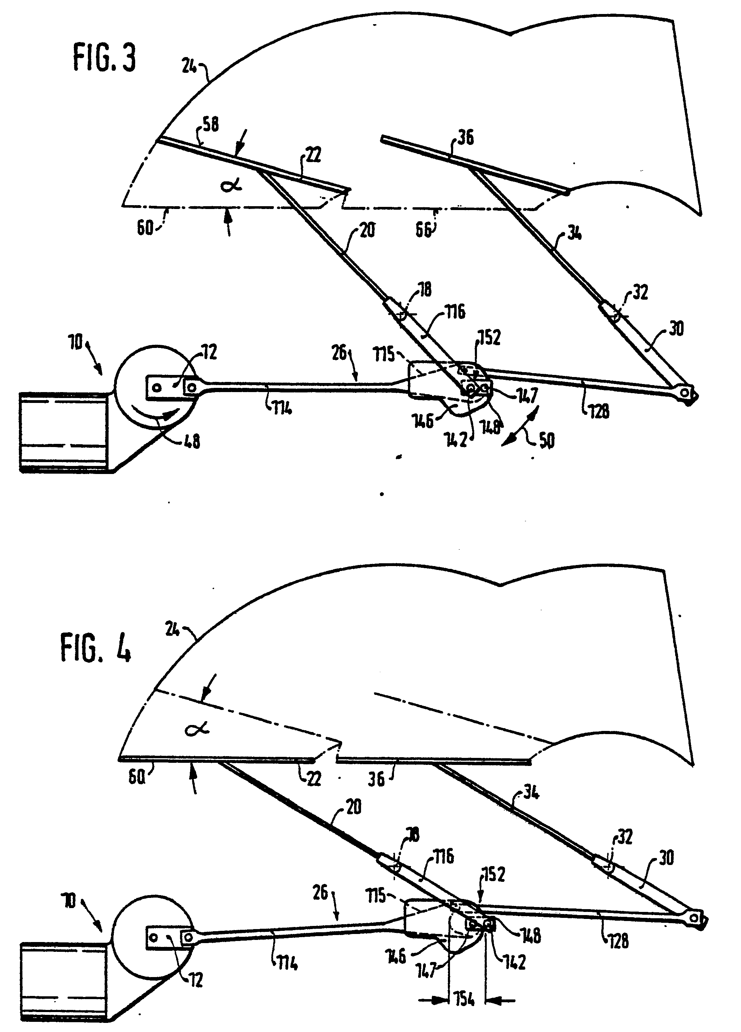

Zwei Ausführungsbeispiele der Erfindung sind in der Zeichnung dargestellt und in der nachfolgenden Beschreibung näher erläutert. Es zeigen Figur 1 eine Prinzipdarstellung einer ersten Ausführung der Wischvorrichtung mit in der einen Umkehrstellung befindlichen Wischblättern, Figur 2 die Wischvorrichtung gemäss Figur 1 mit in Parkstellung befindlichen Wischblättern, Figur 3 eine andere Ausführung der Erfindung, wobei die Betriebsstellung der Wischvorrichtung der Betriebsstellung gemäss Figur 1 entspricht und Figur 4 die Wischvorrichtung gemäss Figur 3, mit in Parkstellung befindlichen Wischblättern.

Beschreibung des Ausführungsbeispiels Eine in Figur 1 dargestellte Wischvorrichtung für Scheiben von Kraftfahrzeugen weist ein Antriebsaggregat 10 auf, das ein Schneckengetriebe beinhaltet und das an eine Kurbel 12 eine Drehbewegung abgibt. An der Kurbel 12 ist ein Ende einer Koppelstange 14 angelenkt, deren anderes Ende gelenkig mit einer Schwinge 16 verbunden ist. Die Schwinge 16 ist fest an einer Wischerwelle 18 angeordnet, die einen Wischerarm 20 trägt, der mit einem Wischelement 22 versehen ist. Das Wischelement 22 liegt auf einer nicht näher dargestellten Scheibe auf, die im Bereich eines von dem Wischelement 22 überstrichenen Wischfeldes 24 sauber gehalten werden soll. Die Kurbel 12 bildet zusammen mit der Koppelstange 14 und der Schwinge 16 ein Pendelgetriebe 26, welches die Drehbewegung der Kurbel 12 in eine Schwingbewegung umwandelt. Im Betrieb der Wischvorrichtung bestreicht das Wischelement 22 somit zwischen zwei Pendel-Umkehrstellungen ein Wischfeld 24, das die Form eines Ringsegments hat. An der Schwinge 16 ist ein Ende einer Schubstange 28 angelenkt, deren anderes Ende gelenkig mit einem Hebel 30 verbunden ist. Der Hebel 30 ist an einer zweiten Wischerwelle 32 befestigt, die über einen mit ihr fest verbundenen Wischerarm 34 ein zweites Wischelement 36 bewegt. Die Schubstange 28 überträgt die Pendelbewegung der Schwinge 16 auf den Hebel 30 und somit auch auf das zweite Wischelement 36. Die beiden Wischelemente 22 und 36 schwingen also synchron zwischen zwei Pendel-Umkehrstellungen über die zu wischende Scheibe.

Auf der plattenförmigen Schwinge 16 ist ein als Schneckenrad ausgebildetes bewegbares, Bauelement 40 drehbar gelagert, das auf seiner einen, seine Drehachse schneidenden Stirnfläche mit einem exzentrisch angeordneten Gelenkzapfen 42 versehen ist. Das Bauelement kann selbstverständlich aber auch ein Zahnsegment sein, das einen gekrümmten Zahnkranz hat und um das Krümmungszentrum drehbar ist. An dem Gelenkzapfen 42 greift das von der Kurbel 12 des Antriebsaggregats 10 abgewandte Ende der Koppelstange 14 gelenkig an, so dass die beiden Bauelemente 14 und 16 des Pendelgetriebes gelenkig miteinander verbunden sind. Der als Kugelzapfen ausgebildete Gelenkzapfen 42 ist exzentrisch zur Drehachse des Schneckenrads 40 angeordnet. Mit dem Schneckenrad 42 kämmt eine Schneckenwelle 44, welche durch die Abtriebswelle eines elektromotorischen Stellantriebs 46 gebildet ist. Der Stellantrieb 46 ist fest auf der Schwinge 16 angeordnet (Figur 1).

Im Betrieb der Wischvorrichtung läuft die Kurbel 12 in Richtung des Pfeiles 48 um. Dabei nimmt die Koppelstange 14 die Schwinge 16 derart mit, dass diese eine Pendelbewegung um die Achse der Wischerwelle 18 in Richtung des Doppelpfeiles 50 ausführt. Über die Schubstange 28 wird diese Pendelbewegung auf den Hebel 30, die Wischerwelle 32 und auf das andere Wischelement 36 übertragen. Wenn die Wischvorrichtung stillgesetzt wird, verbleibt der Wischer 22 in der in Figur 1 dargestellten Haltestellung. Auch das Wischelement 36 befindet sich dann in einer Haltestellung 58, die in Figur 1 gezeigt ist. Um die Wischelemente 22 und 36 nun in eine Parkstellung zu überführen, in welcher die Elemente von einem Karosserieteil abgedeckt sind, wird der Stellantrieb 46 aktiviert, der das den Gelenkzapfen 42 aufweisende Gelenk 52 zusammen mit dem Schneckenrad 40 um die Drehachse des Schneckenrads 40 um 180 Grad dreht. Das Gelenk 52 gelangt dann in die in Figur 2 dargestellte Lage, wobei es um ein Mass 54 versetzt worden ist, das der doppelten Exzentrizität des Gelenkzapfens 42 entspricht. Mit dieser Stellbewegung wird die Schwinge 16 in Richtung des Pfeiles 56 (Figur 2) geschwenkt und über die Wischerwelle 18 und den Wischerarm 20 auch das Wischelement 22 mitgenommen. Das Wischelement 22 gelangt somit aus seiner einen Pendelumkehrstellung, die auch der Haltestellung 58 entspricht, in die Parkstellung 60 (Figur 2). Wenn die Wischvorrichtung wieder in Betrieb gesetzt werden soll wird zunächst über den Stellantrieb 46 das Wischelement 22 in seine in Figur 2 strichpunktiert dargestellte Haltestellung 58 gebracht und danach der Stellantrieb 46 stillgesetzt. Danach wird das Antriebsaggregat 10 in Betrieb genommen, durch welches die Arbeitsbewegung der Wischvorrichtung bewirkt wird. Die vorher beschriebene Überführung des Wischelements 22 aus seiner Haltestellung 58 in die Parkstellung 60 wird natürlich auch über die Schubstange 28, den Hebel 30 und die Wischerwelle 32 auf den Wischerarm 34 und somit auch auf das Wischelement 36 übertragen, das auch diese Bewegungen synchron zum Wischelement 22 mitmacht.

Der Stellantrieb 46 ist im vorliegenden Ausführungsbeispiel mit einem Elektromotor ausgestattet, der so geschaltet ist, dass dessen Betätigung erst dann möglich wird, wenn das Antriebsaggregat 10 stillgesetzt ist. Beim Wiedereinschalten der Wischvorrichtung wird zunächst der Stellantrieb 46 so betrieben, dass die in Figur 1 dargestellte Haltestellung der Wischelemente 22 und 36 erreicht ist. Nach dem Stillsetzen des Stellantriebs 46 läuft das Antriebsaggregat 10 an und bewirkt die Pendel-Wischbewegung der Wischelemente 22 und 36. In bestimmten Fällen kann es von Vorteil sein, wenn der Drehwinkel des Schneckenrades 40 nicht 180° beträgt, so dass die Möglichkeiten der Getriebekinematik – hinsichtlich der Wahl des Überführungswinkels α – genutzt werden können. Weiter ist es denkbar, den Stellantrieb auch an einem anderen Element des Pendelgetriebes anzuordnen.

Damit die Zusatzbewegung, aus der Haltestellung 58 in die Parkstellung 60 (und umgekehrt) den jeweiligen Gegebenenheiten, die von Fahrzeugtyp zu Fahrzeugtyp verschieden sind, angepasst werden können, ist die Exzentrizität des Gelenks 52 am Schneckenrad 40 veränderbar.

Die die Zusatzbewegungen auslösende Abtriebsbewegung des Stellantriebs 46 ist vorzugsweise für beide Stelltätigkeiten gleichsinnig, so dass der Schaltungsaufwand niedrig gehalten werden kann.

Eine andere, in den Figuren 3 und 4 dargestellte Ausführung der erfindungsgemässen Wischvorrichtung entspricht in den Grundzügen der obenbeschriebenen Wischvorrichtung. Deshalb sind alle mit dieser übereinstimmenden Teile mit den gleichen Bezugszahlen versehen wie die Teile der schon beschriebenen Wischvorrichtung. Abweichend davon ist jedoch die Koppelstange 114 an ihrem von der Kurbel 12 abgewandten Ende plattenförmig ausgebildet. Das so gebildete, plattenförmige Ende 115 dient als Aufnahmeteil für einen Stellantrieb 146, der eine Antriebseinheit mit einer Abtriebswelle 147 hat. Der Stellantrieb 146 umfasst einen elektrischen Antriebsmotor und ein diesem nachgeordnetes Schneckengetriebe, das mit der Abtriebswelle 147 wirkverbunden ist. An der Abtriebswelle 147 ist drehfest ein Kurbelarm 148 angeordnet, an dessen freiem Ende ein Gelenkzapfen 142 sitzt. Der vorzugsweise als Kugelzapfen ausgebildete Gelenkzapfen 142 ist in einem als Gelenkpfanne ausgebildeten Lagerelement geführt, das am freien Ende einer stangenförmigen Schwinge 116 angeordnet ist. Die Schwinge 116 ist in der schon beschriebenen Weise mit der Wischerwelle 18 verbunden. Weiter ist an der Schwinge 116 eine Schubstange 128 angelenkt, die in der schon beschriebenen Weise mit dem zum Antrieb des anderen Wischers 34, 36 gehörenden Schwinghebel 30 verbunden ist. Die Antriebseinheit 146 weist einen vorzugsweise elektrischen Antriebsmotor und ein diesem nachgeordnetes Untersetzungsgetriebe auf, dessen Abtriebswelle 147 eine drehende Bewegung abgibt. Eine nicht näher dargestellte schaltungstechnische Einrichtung sorgt dafür, dass der Drehwinkel der Abtriebswelle 147 maximal 180 Grad beträgt. Wie aus einem Vergleich der Figuren 3 und 4 ersichtlich ist, legt der Gelenkzapfen 148 aus seiner in Figur 3 dargestellten Betriebsstellung einen Weg 154 zurück, wenn er in seine in Figur 4 gezeigte Betriebsstellung überführt wird.

Wenn die Wischvorrichtung im Wischbetrieb betrieben werden soll, befindet sich der Kurbelarm 148 der Abtriebswelle 147 in der in Figur 3 dargestellten Betriebsstellung. Die Abtriebsbewegung (Pfeil 48) des Antriebsaggregats 10 wird von der Kurbel 12 auf die Koppelstange 114 und von dieser aus über den feststehenden Gelenkzapfen 142 auf die Schwinge 116 übertragen. Da die Schwingbewegung der Schwinge 116 auch der Wischerwelle 18 mitgeteilt wird, führt auch der Wischerarm 20 mit seinem Wischelement 22 eine entsprechende Schwingbewegung aus. Die Antriebsbewegung der Schwinge 116 wird aber gleichzeitig auch über die Schubstange 128 auf den Schwinghebel 30 und somit auch auf die Wischerwelle 32 übertragen, so dass auch der Wischer 34, 36 eine Schwingbewegung ausführt, die synchron zu der Schwingbewegung des Wischers 20, 22 verläuft.

Wenn nun das Antriebsaggregat 10 abgeschaltet wird sorgt eine schaltungstechnische Massnahme dafür, dass dessen Antriebsmotor erst dann stromlos wird, wenn sich das Wischelement 22 in der in Figur 3 gezeigten Haltestellung befindet, die der Pendelumkehrstellung 58 entspricht. Wenn nun das Wischelement 22 und damit auch das Wischelement 36 in ihre in Figur 4 dargestellte Parkstellung geführt werden soll, wird die Antriebseinheit 146 aktiviert, so dass der Kurbelarm 148 in seine in Figur 4 dargestellte Betriebsstellung geschwenkt wird. Mit dem Zurücklegen des Weges 154 (Figur 4) wird über das Gelenk 142 auch die Schwinge 116 geschwenkt und damit auch eine weitere Schwenkbewegung der Wischerwelle 18 und des Wischers 20, 22 um zusätzlichen Schwenkwinkel α bewirkt. Da der Wischer 34, 36 über die Pendelgetriebeteile 128, 30, 32 mit der Schwinge 116 verbunden ist, wird dieser zusätzliche Schwenkwinkel α auch auf den Wischer 34, 36 übertragen.

Es ist somit ersichtlich, dass der Antriebsmotor des Antriebsaggregats 10 nicht für den grössten Schwenkwinkel, d.h. für den Pendelwinkel plus den Überführungswinkel α ausgelegt zu werden braucht, so dass er relativ kompakt ausgeführt sein kann. Der Zusatzschwenkwinkel α, zu dessen Überwindung relativ hohe Kräfte erforderlich sind, wird von dem stark untersetzten Getriebe 40, 44 bzw. von einem im Stellantrieb 146 angeordneten Untersetzungsgetriebe übernommen, so dass auch der Antriebsmotor des Stellantriebes 46 bzw. 146 sehr klein diemensioniert werden kann.

Die Wischvorrichtung gemäss den Figuren 3 und 4 hat einen geringeren Raumbedarf als die in den Figuren 1 und 2 dargestellte Vorrichtung, weil die Antriebseinheit 146 nicht die relativ grosse räumige Pendelbewegung der Schwinge 16, sondern nur eine fast geradlinige Hin- und Herbewegung des Endes 115 der Koppelstange 114 ausführt.

Bei beiden Ausführungen ist es denkbar, die Träger für die Gelenkzapfen 42 bzw. 142 und die die Zapfen aufnehmenden Lagerelemente auszutauschen. Entscheidend ist es, dass das Gelenk 52 bzw. 152, also der Gelenkzapfen 42 bzw. 142 zusammen mit seinem Lagerelement vestellbar ist.

Alle Schneckengetriebe – im Antriebsaggregat 10, das Getriebe 42, 44 und im Stellantrieb 146 – sind bekanntermassen selbsthemmend. Dies hat den Vorteil, dass die Kurbel 12, das Schneckenrad 40 und der Kurbelarm 148 nur dann verstellt werden können, wenn die vorgeschalteten Antriebsmotoren arbeiten. Eine selbsttätige Verstellung dieser Elemente ist ausgeschlossen.

Beiden beschriebenen Ausführungen ist gemeinsam, dass die Mittel zum Überführen der Wischelemente in eine Parkstellung, den Angriffsort des Gelenks 52 bzw. 142 an dem Pendelgetriebe 26 verschieben. Es wird dabei beispielsweise die wirksame Länge einer zum Pendelgetriebe 26 gehörenden Koppelstange 14 bzw. 114 um ein Mass 54 bzw. 154 verändert.

## Patentansprüche

1. Wischvorrichtung für Scheiben von Kraftfahrzeugen, mit einem eine Drehbewegung abgebenden Antriebsaggregat (10), einem diesem nachgeordneten Gestänge-Pendelgetriebe (12, 14, 16) und einer am Getriebeausgang angeordneten Wischerwelle (18), welche mit einem auf der zu wischenden Scheibe liegenden Wischelement (22) verbunden ist und mit Mitteln zum Überführen des Wischelementes (22) aus einer der einer Pendel-Umkehrstellung entsprechenden Haltestellung (58) in eine ausserhalb des Wischfelds (24) liegende Parkstellung (60), dadurch gekennzeichnet, dass das Pendelgetriebe eine mit einer Schwinge (16) über ein Gelenk (52) verbundene Koppelstange (14) enthält, und dass diese Mittel nach dem Stillsetzen des Antriebsaggregats(10) den Angriffsort des Gelenks (52) an der Schwinge (16) verschieben.

2. Wischvorrichtung nach Anspruch 1, dadurch gekennzeichnet, dass die wirksame Länge der zum Pendelgetriebe (26) gehörenden Koppelstange (14) veränderbar ist.

3. Wischvorrichtung nach Anspruch 1, dadurch gekennzeichnet, dass die Verstellung des Gelenks (52) motorisch, insbesondere mittels eines elektromotorisch betätigbaren Stellantriebs (46) erfolgt.

4. Wischvorrichtung nach einem der Ansprüche 1 bis 3, bei der das Pendelgetriebe (12, 14, 15) eine am Antriebsaggregat (10) angeordnete, umlaufende Kurbel (12) aufweist, an deren freiem Ende eine Koppelstange (14) angelenkt ist, deren anderes Ende mit einer an der Wischerwelle befestigten Schwinge (16) gelenkig verbunden ist, dadurch gekennzeichnet, dass das die Koppelstange (14) mit der Schwinge (16) verbindende Gelenk (52) verstellbar ist.

5. Wischvorrichtung nach Anspruch 4, dadurch gekennzeichnet, dass an dem einen der beiden Getriebeteile (14 bzw. 16), ein bewegbares Bauelement (40) gelagert ist, das einen mit dem anderen Getriebeteil (16 bzw. 14) verbindbaren Gelenkzapfen (42) aufweist.

6. Wischvorrichtung nach Anspruch 5, dadurch gekennzeichnet, dass das bewegbare Bauelement (40) einen gekrümmten Zahnkranz aufweist, der eine Drehachse des Bauelements um mehr als 180 Grad umschlingt.

7. Wischvorrichtung nach Anspruch 6, dadurch gekennzeichnet, dass das Bauelement ein mit einem Antrieb (46) wirkverbundenes Zahnrad (40) ist, an dessen einen, quer zur Drehachse verlaufenden Stirnfläche der vorzugsweise als Kugelzapfen ausgebildete Gelenkzapfen (42) exzentrisch angeordnet ist.

8. Wischvorrichtung nach Anspruch 7, dadurch gekennzeichnet, dass das Zahnrad ein mit einer Schneckenwelle (44) kämmendes Schneckenrad (40) ist.

9. Wischvorrichtung nach Anspruch 8, dadurch gekennzeichnet, dass die Schneckenwelle (44) den Abtrieb des Stellantriebs (46) bildet.

10. Wischvorrichtung nach Anspruch 4, dadurch gekennzeichnet, dass das Schneckenrad (40) und der Stellantrieb (46) an der Schwinge (16) angeordnet sind.

11. Wischvorrichtung nach Anspruch 10, dadurch gekennzeichnet, dass an der Schwinge (16) eine Schubstange (28) gelagert ist, welche über einen mit einer zweiten Wischerwelle (32) verbundenen Hebel (30) eine Synchronbewegung der beiden Wischerwellen (18 bzw. 32) erzwingt.

12. Wischvorrichtung nach Anspruch 7, dadurch gekennzeichnet, dass die Exzentrizität des Gelenkzapfens (42) gegenüber dem Zahnrad (40) veränderbar ist.

13. Wischvorrichtung nach Anspruch 7, dadurch gekennzeichnet, dass das Zahnrad (40) eine Stellbewegung von maximal 180 Grad ausführt.

14. Wischvorrichtung nach Anspruch 5, dadurch gekennzeichnet, dass das bewegbare Bauelement ein an einer Welle (147) befestigter Kurbelarm (148) ist, an dessen freiem Ende der Gelenkzapfen (142) sitzt.

15. Wischvorrichtung nach Anspruch 14, dadurch gekennzeichnet, dass der Kurbelarm (148) um maximal 180 Grad schwenkbar ist.

16. Wischvorrichtung nach Anspruch 14, dadurch gekennzeichnet, dass die Welle (147) durch die Abtriebswelle eines vorzugsweise elektromotorisch betriebenen Stellantriebs (146) gebildet ist.

17. Wischvorrichtung nach Anspruch 10, dadurch gekennzeichnet, dass der Stellantrieb (146) an der Koppelstange (114) angeordnet und die Schwinge (116) mittels des Gelenkzapfens (142) an dem Kurbelarm (148) angelenkt ist.

18. Wischvorrichtung nach Anspruch 13, dadurch gekennzeichnet, dass die Schubstange (128) an der Schwinge (116) angelenkt ist.

## Claims

1. Wiping device for windscreens of motor vehicles, with a drive unit (10) delivering a rotary movement, a linkage pendulum gear (12, 14, 16) downstream of said drive unit and a wiper shaft (18) which is arranged at the gear output and is connected to a wiping element (22) lying on the windscreen to be wiped, and with means for transferring the wiping element (22) from a hold position (58) corresponding to the one pendulum reversal position into a parking position (60) lying outside the wiping area (24), characterized in that the pendulum gear includes a coupling rod (14) connected to a rocker arm (16) via a joint (52), and in that, after stopping the drive unit (10), these means displace the point of application of the link (52) on the rocker arm (16).

2. Wiping device according to claim 1, characterized in that the effective length of the coupling rod (14) belonging to the pendulum gear (26) is changeable.

3. Wiping device according to claim 1, characterized in that the adjustment of the link (52) is motorized, carried out in particular by means of an electromotively operable actuating drive (46).

4. Wiping device according to one of claims 1 to 3, in which the pendulum gear (12, 14, 15) has a revolving crank (12) which is arranged on the drive unit (10) and at the free end of which a coupling rod (14) is articulated and the other end of which is connected to a joint to a rocker arm (16) fixed on the wiper shaft, characterized in that the coupling rod (14) is adjustable with the link (52) connecting the rocker arm (16).

5. Wiping device according to claim 4, characterized in that on one of the two gear parts (14 or 16) is mounted a movable component (40) which has a link pin (42) which can be connected to the other gear part (16 or 14).

6. Wiping device according to claim 5, characterized in that the movable component (40) has a curved gear rim which wraps around an axis of rotation of the component by more than 180°.

7. Wiping device according to claim 6, characterized in that the component is a gear wheel (40) which is effectively connected to a drive (46) and at whose one face running transverse to the axis of rotation is eccentrically arranged the link pin (42), preferably designed as a ball pin.

8. Wiping device according to claim 7, characterized in that the gear wheel is a worm wheel (40) meshing with a worm-gear shaft (44).

9. Wiping device according to claim 8, characterized in that the worm-gear shaft (44) forms the power take-off of the actuating drive (46).

10. Wiping device according to claim 4, characterized in that the worm wheel (40) and the actuating drive (46) are arranged on the rocker arm (16).

11. Wiping device according to claim 10, characterized in that mounted on the rocker arm (16) is a thrust rod (28) which, vis a lever (30) connected to a second wiper (32), forces a synchronous movement of the two wiper shafts (18 and 32).

12. Wiping device according to claim 7, characterized in that the eccentricity of the link pin (42) with respect to the gear wheel (40) is changeable.

13. Wiping device according to claim 7, characterized in that the gear wheel (40) executes an actuating movement of a maximum of 180°.

14. Wiping device according to claim 5, characterized in that the movable component is a crank arm (148) fixed on a shaft (147) at the free end of which crank arm the link pin (142) is seated.

15. Wiping device according to claim 14, characterized in that the crank arm (148) is pivotable by a maximum of 180°.

16. Wiping device according to claim 14, characterized in that the shaft (147) is formed by the power take-off shaft of a preferably electromotively operable actuating drive (146).

17. Wiping device according to claim 10, characterized in that the actuating drive (146) is arranged on the coupling rod (114) and the rocker arm (116) is articulated at the crank arm (148) by means of the link pin (142).

18. Wiping device according to claim 13, characterized in that the thrust rod (128) is articulated at the rocker arm (116).

## Revendications

1. Dispositif d'essuie-glace pour glaces de véhicules automobiles, comportant un groupe d'entraînement (10) qui communique un mouvement de rotation, un mécanisme pendulaire à tringlerie (12, 14, 16) disposé en aval de ce groupe et un arbre d'essuie-glace (18) qui est disposé à la sortie du mécanisme et qui est relié à un balai d'essuie-glace (22) posé sur la glace à essuyer; et comportant des moyens pour faire passer le balai d'essuie-glace (22) d'une position d'arrêt (58), correspondant à l'une de ses positions de changement de sens de mouvement pendulaire, à une position de garage (60) située en dehors de la zone de balayage (24), caractérisé en ce que le mécanisme pendulaire contient une bielle (14) reliée à une plaque oscillante (16) par l'intermédiaire d'une articulation (52); et en ce qu'après l'arrêt du groupe d'entraînement (10) ces moyens décalent le point d'attaque de l'articulation (52) sur la plaque oscillante (16).

2. Dispositif d'essuie-glace selon la revendication 1, caractérisé en ce que l'on peut modifier la longueur efficace de la bielle (14) appartenant au mécanisme pendulaire (26).

3. Dispositif d'essuie-glace selon la revendication 1, caractérisé en ce que le déplacement de l'articulation (52) est motorisé, en particulier qu'il se fait au moyen d'un entraînement de position (46) manœuvré par un moteur électrique.

4. Dispositif d'essuie-glace selon l'une des revendications 1 à 3, dans lequel le mécanisme pendulaire (12, 14, 15) présente une manivelle tournante (12) qui est disposée sur le groupe d'entraînement (10) et à l'extrémité libre de laquelle est articulée une bielle (14) dont l'autre extrémité est reliée, avec l'articulation, à une plaque oscillante (16) fixée à l'arbre d'essuie-glace, caractérisé en ce que l'articulation (52) qui relie la bielle (14) à la plaque oscillante (16) est réglable.

5. Dispositif d'essuie-glace selon la revendication 4, caractérisé en ce que sur l'une des deux pièces du mécanisme (14 ou 16) porte un élément mobile qui présente un pivot (42) qui peut être relié à l'autre pièce du mécanisme (16 ou 14).

6. Dispositif d'essuie-glace selon la revendication 5, caractérisé en ce que l'élément mobile (40) présente une couronne dentée courbe qui entoure un axe de rotation de l'élément sur plus de 180°.

7. Dispositif d'essuie-glace selon la revendication 6, caractérisé en ce que l'élément est une roue dentée (40) qui est reliée positivement à un entraînement (46) et sur l'une des surfaces frontales, courant transversalement par rapport à l'axe de rotation, de laquelle est disposé excentriquement le pivot (42) conçu de préférence comme pivot à rotule mâle.

8. Dispositif d'essuie-glace selon la revendication 7, caractérisé en ce que la roue dentée est une roue à vis sans fin (40) qui engrène avec un arbre à vis sans fin (44).

9. Dispositif d'essuie-glace selon la revendication 8, caractérisé en ce que l'arbre à vis sans fin (44) forme l'arbre de sortie de l'entraînement de position (46).

10. Dispositif d'essuie-glace selon la revendication 4, caractérisé en ce que la roue à vis sans fin (40) et l'entraînement de position (46) sont disposés sur la plaque oscillante (16).

11. Dispositif d'essuie-glace selon la revendication 10, caractérisé en ce que sur la plaque oscillante (16) porte une bielle (28) qui, par l'intermédiaire d'un levier (30) relié à un second arbre d'essuie-glace (32), impose un mouvement en synchronisme aux deux arbres d'essuie-glace (18 et 32).

12. Dispositif d'essuie-glace selon la revendication 7, caractérisé en ce que l'on peut modifier l'excentricité du pivot (42) par rapport à la roue dentée (40).

13. Dispositif d'essuie-glace selon la revendication 7, caractérisé en ce que la roue dentée (40) exécute un mouvement de positionnement de 180 degrés au maximum.

14. Dispositif d'essuie-glace selon la revendication 5, caractérisé en ce que l'élément mobile est une manivelle (148) qui est fixée à un arbre (147) et à l'extrémité libre de laquelle se trouve le pivot (142).

15. Dispositif d'essuie-glace selon la revendication 14, caractérisé en ce que la manivelle (148) peut pivoter de 180 degrés au maximum.

16. Dispositif d'essuie-glace selon la revendication 14, caractérisé en ce que l'arbre (147) est formé par l'arbre de sortie d'un entraînement de position (146) entraîné de préférence par un moteur électrique.

17. Dispositif d'essuie-glace selon la revendication 10, caractérisé en ce que l'entraînement de position (146) est disposé sur la bielle (114); et en ce que la tige oscillante (116) est articulée au bras de manivelle (148) au moyen du pivot (142).

18. Dispositif d'essuie-glace selon la revendication 13, caractérisé en ce que la bielle (128) est articulée sur la tige oscillante (116).

**Fig.1**

**Fig. 2**

FIG. 3

FIG. 4